# EUROPEAN PATENT SPECIFICATION

(11) **EP 2 440 607 B1**
(45) Date of publication and mention of the grant of the patent: **08.04.2015**
(21) Application number: 10717721.4
(22) Date of filing: 16.04.2010
(51) Int. Cl.: C08J 9/14, C09K 3/30, C09K 5/04

(54) **HEAT TRANSFER COMPOSITIONS**
WÄRMEÜBERTRAGUNGSZUSAMMENSETZUNGEN
COMPOSITIONS DE TRANSFERT DE CHALEUR

(30) Priority: 16.04.2009 GB 0906547
(43) Date of publication of application: 18.04.2012
(73) Proprietor: Mexichem Amanco Holding S.A. de C.V., Estado de Mexico c.p. 54060 (MX)
(72) Inventor: LOW, Robert, Elliott, Cheshire WA7 4QF (GB)
(74) Representative: Potter Clarkson LLP
(86) International application number: PCT/GB2010/000774
(87) International publication number: WO 2010/119265

(56) References cited:
- WO-A2-2007/109748
- US-A1- 2006 243 945
- US-A1- 2008 121 837

## Description

The invention relates to heat transfer compositions, and in particular to heat transfer compositions which may be suitable as replacements for existing refrigerants such as R-134a, R-152a, R-1234yf, R-22, R-410A, R-407A, R-407B, R-407C, R-507 and R-404a.

Mechanical refrigeration systems and related heat transfer devices such as heat pumps and air-conditioning systems are well known. In such systems, a refrigerant liquid evaporates at low pressure taking heat from the surrounding zone. The resulting vapour is then compressed and passed to a condenser where it condenses and gives off heat to a second zone, the condensate being returned through an expansion valve to the evaporator, so completing the cycle. Mechanical energy required for compressing the vapour and pumping the liquid is provided by, for example, an electric motor or an internal combustion engine.

In addition to having a suitable boiling point and a high latent heat of vaporisation, the properties preferred in a refrigerant include low toxicity, non-flammability, non-corrosivity, high stability and freedom from objectionable odour. Other desirable properties are ready compressibility at pressures below 25 bars, low discharge temperature on compression, high refrigeration capacity, high efficiency (high coefficient of performance) and an evaporator pressure in excess of 1 bar at the desired evaporation temperature.

Dichlorodifluoromethane (refrigerant R-12) possesses a suitable combination of properties and was for many years the most widely used refrigerant. Due to international concern that fully and partially halogenated chlorofluorocarbons, such as dichlorodifluoromethane and chlorodifluoromethane, were damaging the earth's protective ozone layer, there was general agreement that their manufacture and use should be severely restricted and eventually phased out completely. The use of dichlorodifluoromethane was phased out in the 1990's.

Chlorodifluoromethane (R-22) was introduced as a replacement for R-12 because of its lower ozone depletion potential. Following concerns that R-22 is a potent greenhouse gas, its use is also being phased out. R-410A and R-407 (including R-407A, R-407B and R-407C) have been introduced as a replacement refrigerant for R-22. However, R-22, R-410A and R-407 all have a high global warming potential (GWP, also known as greenhouse warming potential).

1,1,1,2-tetrafluoroethane (refrigerant R-134a) was introduced as a replacement refrigerant for R-12. However, despite having a low ozone depletion potential, R134a has a greenhouse warming potential (GWP, also known as global warming potential) of 1300. It would be desirable to find replacements for R134a that have a lower GWP.

R-152a (1,1-difluoroethane) has been identified as an alternative to R-134a. It is somewhat more efficient than R-134a and has a greenhouse warming potential of 120. However the flammability of R-152a is judged too high, for example to permit its safe use in mobile air conditioning systems. In particular its lower flammable limit in air is too low, its flame speeds are too high, and its ignition energy is too low.

R-1234yf (2,3,3,3-tetrafluoropropene) has been identified as a candidate alternative refrigerant to replace R-134a in certain applications, notably the mobile air conditioning or heat pumping application. Its GWP is about 4. R-1234yf is flammable but its flammability characteristics are generally regarded as acceptable for some applications including mobile air conditioning or heat pumping. In particular its lower flammable limit, ignition energy and flame speed are all significantly lower than that of R-152a. However the energy efficiency and refrigeration capacity of R-1234yf have been found to be significantly lower than those of R-134a and in addition the fluid has been found to exhibit increased pressure drop in system pipework and heat exchangers. A consequence of this is that to use R-1234yf and achieve energy efficiency and cooling performance equivalent to R-134a, increased complexity of equipment and increased size of pipework is required, leading to an increase in indirect emissions associated with equipment. Furthermore, the production of R-1234yf is thought to be more complex and less efficient in its use of raw materials (fluorinated and chlorinated) than R-134a. So the adoption of R-1234yf to replace R-134a will consume more raw materials and result in more indirect emissions of greenhouse gases than does R-134a.

Whilst heat transfer devices of the type to which the present invention relates are essentially closed systems, loss of refrigerant to the atmosphere can occur due to leakage during operation of the equipment or during maintenance procedures. It is important, therefor, to replace fully and partially halogenated chlorofluorocarbon refrigerants by materials having zero ozone depletion potentials.

In addition to the possibility of ozone depletion, it has been suggested that significant concentrations of halocarbon refrigerants in the atmosphere might contribute to global warming (the so-called greenhouse effect). It is desirable, therefore, to use refrigerants which have relatively short atmospheric lifetimes as a result of their ability to react with other atmospheric constituents such as hydroxyl radicals or as a result of ready degradation through photolytic processes.

The environmental impact of operating an air conditioning or refrigeration system, in terms of the emissions of greenhouse gases, should be considered with reference not only to the so-called "direct" GWP of the refrigerant, but also with reference to the so-called "indirect" emissions, meaning those emissions of carbon dioxide resulting from consumption of electricity or fuel to operate the system. Several metrics of this total GWP impact have been developed, including those known as Total Equivalent Warming Impact (TEWI) analysis, or Life-Cycle Carbon Production (LCCP) analysis. Both of these measures include estimation of the effect of refrigerant GWP and energy efficiency on overall warming impact.

There is a need to provide alternative refrigerants having improved properties, such as low flammability. Fluorocarbon combustion chemistry is complex and unpredictable. It is not always the case that mixing a non flammable fluorocarbon with a flammable fluorocarbon reduces the flammability of the fluid. For example, the inventors have found that if non flammable R-134a is mixed with flammable R-152a, the lower flammable limit of the mixture can be reduced relative to that of pure R-152a (i.e. the mixture can be more flammable than pure R-152a). The situation is rendered more complex and less predictable if ternary or quaternary compositions are considered.

There is also a need to provide alternative refrigerants that may be used in existing devices such as refrigeration devices with little or no modification.

R-1243zf is a low flammability refrigerant, and has a relatively low GWP. Its boiling point, critical temperature, and other properties make it a potential alternative to higher GWP refrigerants such as R-134a, R-410A and R-407. R-1243zf (also known as HFC1243zf) is 3,3,3-trifluoropropene (CF₃CH=CH₂).

However, the properties of 1243zf are such that it is not ideal as a direct replacement for existing refrigerants such as R-134a, R-410A and R-407. In particular, its capacity is too low, by which is meant that a refrigerator or air conditioning system having a fixed compressor displacement and designed for existing refrigerants will deliver less cooling when charged with R-1243zf and controlled to the same operating temperatures. This deficiency is in addition to its flammability, which also impacts on its suitability as a substitute for existing refrigerants when used alone.

In two of five broad embodiments, US 2006/243945 describes (a) compositions comprising 1,3,3,3-tetrafluoropropene (R-1234ze) and at least one of a number of additional components including trifluoropropene (R-1243zf) and difluoromethane (R-32); and (b) compositions comprising R-1243zf and at least one of a number of additional components including R-1234ze and R-32.

US 2008/121837 is directed to heat transfer compositions comprising R-32, a second component of CF₃I, 1,2,3,3,3-pentafluoropropene (R-1225) or combinations of the two, and optionally at least one third component selected from C₂-C₃ fluorinated compounds.

WO 2007/109748 is directed to blowing agents comprising at least one fluoroalkene of formula 'XCF_{z}R_{3-z}' (where X = C₁-C₅ unsaturated, substituted or unsubstituted radical, R = Cl, F, Br, I or H and z = 1 - 3), and at least one fluorinated ether.

A principal object of the present invention is therefore to provide a heat transfer composition which is usable in its own right or suitable as a replacement for existing refrigeration usages which should have a reduced GWP, yet have a capacity and energy efficiency (which may be conveniently expressed as the "Coefficient of Performance") ideally within 20% of the values, for example of those attained using existing refrigerants (e.g. R-134a, R-1234yf, R-152a, R-22, R-410A, R-407A, R-407B, R-407C, R-507 and R-404a), and preferably within 10% or less (e.g. about 5%) of these values. It is known in the art that differences of this order between fluids are usually resolvable by redesign of equipment and system operational features without entailing significant cost differences. The composition should also ideally have reduced toxicity and acceptable flammability.

The invention addresses the foregoing and other deficiencies by the provision of a heat transfer composition comprising:
(i) E-1,3,3,3-tetrafluoroprop-1-ene (R-1234ze(E), CF₃CH=CHF)
(ii) R-1243zf (3,3,3 trifluoropropene) ; and
(iii) a R-32 (difluoromethane)

These compositions may also contain a fourth component (iv) selected from R134a (1,1,1,2-tetrafluoroethane), R-125 (pentafluoroethane), R-1234yf (2,3,3,3-tetrafluoropropene) and mixtures thereof.

The above chemicals are commercially available, for example from Apollo Scientific (UK).

Unless otherwise stated, these compositions will be referred to hereinafter as the compositions of the invention. This specification describes many embodiments falling within the scope of the compositions of the invention defined above. For example, compounds for each of the components in the compositions of the invention, and preferred amounts for those compounds and components are also described in detail, as well as advantageous properties of the compositions of the invention and their proposed utility. It is to be understood that such features of the invention as described herein may be combined in any way, as appropriate, as would be understood by the person of ordinary skill in the art.

The compositions of the invention have zero ozone depletion potential.

Surprisingly, it has been found that the compositions of the invention deliver acceptable properties for use as alternatives to existing refrigerants such as R-134a, R-152a, R-1234yf, R-22, R-410A, R-407A, R-407B, R-407C, R-507 and R-404a, while reducing GWP and without resulting in high flammability hazard.

Unless otherwise stated, as used herein "low temperature refrigeration" means refrigeration having an evaporation temperature of from about -40 to about -80 °C. "Medium temperature refrigeration" means refrigeration having an evaporation temperature of from about -15 to about -40 °C.

Unless otherwise stated, IPCC (Intergovernmental Panel on Climate Change) TAR (Third Assessment Report) values of GWP have been used herein. The GWP of R-1243ze has been taken as 4 in line with known atmospheric reaction rate data and by analogy with R-1234yf and R-1225ye (1,2,3,3,3-pentafluoroprop-1-ene).

The GWP of selected existing refrigerant mixtures on this basis is as follows:

| | |
|---|---|
| R-407A | 1990 |
| R-407B | 2695 |
| R-407C | 1653 |
| R-404A | 3784 |
| R-507 | 3850 |
| R-134a | 1300 |

Preferably, the compositions of the invention have a GWP less than R-134a, R-22, R-410A, R-407A, R-407B, R-407C, R-507 or R-404a. Conveniently, the GWP of the compositions of the invention is less than about 3500, 3000, 2500 or 2000. For instance, the GWP may be less than 2500, 2400, 2300, 2200, 2100, 2000, 1900, 1800, 1700, 1600 or 1500. The GWP of the compositions of the invention may be less than 1300, preferably less than 1000, more preferably less than 500, 400, 300 or 200, especially less than 150 or 100, even less than 50 in some cases.

Preferably the compositions are of reduced flammability hazard when compared to the individual flammable components of the compositions (e.g. R-1243zf). In one aspect, the compositions have one or more of (a) a higher lower flammable limit; (b) a higher ignition energy; or (c) a lower flame velocity compared to R-1243zf alone. In a preferred embodiment, the compositions of the invention are non-flammable.

Flammability may be determined in accordance with ASHRAE Standard 34 incorporating the ASTM Standard E-681 with test methodology as per Addendum 34p dated 2004, the entire content of which is incorporated herein by reference.

In some applications it may not be necessary for the formulation to be classed as non-flammable by the ASHRAE 34 methodology; it is possible to develop fluids whose flammability limits will be sufficiently reduced in air to render them safe for use in the application, for example if it is physically not possible to make a flammable mixture by leaking the refrigeration equipment charge into the surrounds. We have found that the effect of adding further refrigerants to refrigerant R-1234ze(E) is to modify the flammability in mixtures with air in this manner.

Temperature glide, which can be thought of as the difference between bubble point and dew point temperatures of a zeotropic (non-azeotropic) mixture at constant pressure, is a characteristic of a refrigerant; if it is desired to replace a fluid with a mixture then it is often preferable to have similar or reduced glide in the alternative fluid. In an embodiment, the compositions of the invention are zeotropic.

Conveniently, the temperature glide (in the evaporator) of the compositions of the invention is less than about 15K, for example less than about 10K or 5K.

Advantageously, the volumetric refrigeration capacity of the compositions of the invention is within about 15% of the existing refrigerant fluid it is replacing, preferably within about 10% or even about 5%.

Preferably, the cycle efficiency (Coefficient of Performance) of the compositions of the invention is within about 10% of the existing refrigerant fluid it is replacing, preferably within about 5% or even better than the existing refrigerant fluid it is replacing. Conveniently, the compressor discharge temperature of the compositions of the invention is within about 15K of the existing refrigerant fluid it is replacing, preferably about 10K or even about 5K (e.g. in the case of R-4078/R-404A/R-507).

R-1234ze exists in *E-*and Z- geometric isomers. The E- isomer (R-1234ze(E) or *trans-*1234ze is used in the compositions of the invention. This is because the relatively high boiling point of the Z-isomer (about +9 °C) compared to the the E-isomer (about -19) is thought to cause difficulties in the replacement of existing refrigerants (e.g. R-134a and R-1234yf) with composition containing R-1234ze(Z).

The compositions of the invention typically contain from about 5 to about 95 % by weight of R-1234ze(E), based on the total weight of the composition, for example from about 5 to about 90 % or about 5 to about 80 % or about 5 to about 70 % or about 5 to about 60 %; or from about 10 to about 90 % or about 10 to about 80 % or about 10 to about 70 % or about 10 to about 60 %; or from about 20 to about 90 % or about 20 to about 80 % or about 20 to about 70 % or about 20 to about 60 %.

In one aspect, the compositions of the invention contain less than about 50 % by weight of R-1234ze(E), such as from about 5 to about 50 % by weight, for example from about 10 to about 50 % or about 20 to about 50 %.

The second component (R-1243zf) may be present in the compositions of the invention in an amount of from about 5 to about 95 % by weight, based on the total weight of the composition, for example from about 10 to about 95 %, or about 20 to about 95 %, or about 30 to about 95 %; or from about 10 to about 90 %, or about 20 to about 90 %, or about 30 to about 90 %; or from about 10 to about 85 %, or about 20 to about 85 %, or about 30 to about 85 %.

In one aspect, the compositions of the invention contain more than about 40 % by weight of the second component (R-1243zf), such as from about 40 to about 95 % by weight, for example from about 40 to about 90 % or about 20 to about 85 %.

The third component (R-32) may be present in the compositions of the invention in an amount of from about 1 to about 40 % by weight, based on the total weight of the composition, for example from about 2 to about 40 %, or about 3 to about 40 %, or about to about 40 %; or from about 1 to about 30 %, or about 2 to about 30 %, or about 5 to about 30 %; or from about 1 to about 20 %, or about 2 to about 20 %, or about 5 to about 20%.

In one aspect, the compositions of the invention contain less than about 15 % by weight of the third component (R-32), such as from about 1 to about 15 % by weight, for example from about 2 to about 15 % or about 3 to about 15 %.

The compositions of the invention optionally contain a fourth component (iv) selected from R-134a (1,1,1,2-tetrafluoroethane), R-125 (pentafluoroethane), R-1234yf (2,3,3,3-tetrafluoropropene), and mixtures thereof. In one aspect, the fourth component is selected from R-134a, R-1234yf and mixtures thereof. Preferably, the fourth component is R-134a.

The fourth component (e.g. R-134a and/or R-1234yf) may be present in an amount of from about 1 to about 70 % by weight, based on the total weight of the composition. For example, the compositions of the invention may contain the fourth component in an amount of from about 1 to about 40 % or about 1 to about 50 % by weight, based on the total weight of the composition, for example from about 2 to about 40 %, or about 3 to about 40 %, or about 5 to about 40 %; or from about 1 to about 25 %, or about 2 to about 25 %, or about 5 to about 25 %; or from about 1 to about 15 %, or about 2 to about 15 %, or about 5 to about 15 %.

In one aspect, the compositions of the invention contain less than about 10 % by weight of the third component (R-32), such as from about 1 to about 10 % by weight, for example from about 2 to about 10 % or about 3 to about 10 %.

In a further aspect, the compositions of the invention may contain more of the fourth component (e.g. R-134a), for example to reduce flammability. Such compositions may contain from about 40 to about 70 %, from about 50 to about 70 %, from about 40 to about 60 %, or about 50 to about 60 % by weight of the fourth component, based on the total weight of the composition.

Compositions according to the invention conveniently comprise substantially no (e.g. 0.5% or less, preferably 0.1% or less) R-1225 (pentafluoropropene), conveniently substantially no R-1225ye (1,2,3,3,3-pentafluoropropene), or R-1225zc (1,1,3,3,3-pentafluoropropene), which compounds may have associated toxicity issues.

The amounts of the components of the compositions of the invention may vary from the values set out above and will depend on factors such as the particular compounds being used as second and third components, the refrigerant being replaced, and the use of the compositions, for instance in air conditioning or refrigeration.

As used herein, all % amounts mentioned in compositions herein, including in the claims, are by weight based on the total weight of the compositions, unless otherwise stated.

A preferred composition of the invention is a ternary blend of R-1234ze(E), R-1243zf and R-32.

Compositions of the invention that are a blend of R-1243zf, R-32, and R-1234ze(E) typically contain:
from about 5 to 95 %, 5 to 90 %, 5 to 80 %, 5 to 70 %, 10 to 95 %, 10 to 90 %, 10 to 80 %, 10 to 70 %, 15 to 95 %, 15 to 90 %, 15 to 80 %, 15 to 70 %, 20 to 95 %, 20 to 90 %, 20 to 80 %, 20 to 70 %, for instance from about 15 to about 80 or 90 % (e.g. about 20 to about 70 %) of R-1243zf, by weight, based on the total weight of the composition;
from about 5 to 95 %, 5 to 90 %, 5 to 80 %, 5 to 70 %, 10 to 95 %, 10 to 90 %, 10 to 80 %, 10 to 70 %, 15 to 95 %, 15 to 90 %, 15 to 80 %, 15 to 70 %, 20 to 95 %, 20 to 90 %, 20 to 80 %, 20 to 70 %, for instance from about 15 to about 80 % (e.g. about 20 to about 70 %) of R-1234ze(E), by weight, based on the total weight of the composition; and
from about 1 to about 20 %, 2 to 20 %, 5 to 20 %, 1 to 15 %, 2 to 15 %, 5 to 15 %, 1 to 12 %, 2 to 12 %, 5 to 12 % (e.g. from about 2 to about 10 or 15 %) of R-32, by weight, based on the total weight of the composition.

In one aspect, the blends of R-1243zf, R-32, and R-1234ze(E) typically contain less than about 15% by weight R-32, and less than about 50% by weight R-1234ze(E), with the balance being R-1243zf, based on the total weight of the composition.

In a further aspect, the blends of R-1243zf, R-32, and R-1234ze(E) contain from about 5 to about 15 % R-32 by weight, from about 5 to about 95 % R-1234ze(E) by weight, and from about 5 to about 95 % R-1243zf by weight. Such blends may contain from about 5 to about 15 % R-32 by weight, from about 5 to about 50 % R-1234ze(E) by weight, and from about 35 to about 90 % R-1243zf by weight. A series of such blends containing varying amounts of each component is set out in the Examples.

Any of the blends of R-1243zf, R-32, and R-1234ze(E) described herein may additionally contain a fourth component, e.g. R-134a and/or R-1234yf.

An embodiment of the invention relates to a quaternary blend of R-1243zf, R-32, R-134a and R-1234ze(E). The R-134a may be present in an amount of from about 1 to about 70 % by weight, based on the total weight of the composition.

In one aspect, the quaternary blends of R-1243zf, R-32, R-134a and R-1234ze(E) typically contain R-134a in an amount of from about 1 to about 20 %, about 2 to about 20 %, about 3 to about 20 %, about 1 to about 15 %, about 2 to about 15 %, about 3 to about 15 %, about 1 to about 12 %, about 2 to about 12 %, about 3 to about 12 %, by weight (e.g. from about 1 to about 10 or 15 %), based on the total weight of the composition.

For example, the blends of R-1243zf, R-32, R-134a and R-1234ze(E) may contain from about 1 to about 15 % R-32 (e.g. from about 2 to about 10 %) by weight, from about 1 to about 15 % R-134a (e.g. from about 2 to about 10 %) by weight, from about 5 to about 95 % R-1234ze(E) (e.g. from about 10 to about 90 %) by weight, and from about 5 to about 95 % R-1243zf (e.g. from about 10 to about 90 %) by weight, based on the total weight of the composition. A series of such quaternary blends is set out in the Examples.

Preferred blends of R-1243zf, R-32, R-134a and R-1234ze(E) may contain from about 1 to about 15 % R-32 by weight, from about 2 to about 10 % R134a by weight, from about 5 to about 50 % R-1234ze(E) by weight, and from about 25 to about 92 % R-1243zf by weight, based on the total weight of the composition.

Some existing technologies designed for R-134a may not be able to accept even the reduced flammability of some of the fluids of the invention (any fluid of the invention having GWP less than 150 is believed to be flammable to some extent).

The inventors have used the ASHRAE Standard 34 methodology at 60°C in a 12 litre flask to determine the limiting non flammable composition of binary mixtures of R-1243zf with R-134a and R-1234yf with R-134a. It was found that a 48%/52% (weight basis) R-134a/R-1234yf mixture would be non flammable and that a 79%/21% (weight basis) R-134a/R-1243zf mixture would be non flammable. The R-1234yf mixture has a lower GWP (625) than the equivalent non flammable R-1243zf mixture and also will exhibit slightly higher volumetric capacity. However its pressure drop characteristics and cycle energy efficiency will be worse than the R-1243zf blend. It is desirable to attempt to ameliorate these effects.

A further aspect of the invention concerns mixtures of R-32, R-134a, R-1234ze(E) and R-1243zf, whose overall environmental impact is lower than that of either R-134a, the equivalent non flammable binary mixture of R-134a/R-1234yf or the non flammable binary mixture of R-134a/R-1243zf and whose composition is non flammable.

This may be achieved by the quaternary R-1243zf/R-32/R-134a/R-1234ze(E) compositions of the invention containing a relatively high amount of R-134a. For example, the invention provides blends of R-1243zf/R-32/R-134a/R-1234ze(E) containing from about 1 to about 10 % (e.g. about 2 to about 8 %) R-32 by weight, from about 40 to about 70 % (e.g. about 50 to about 60 %) R-134a by weight, from about 10 to about 40 % (e.g. about 20 to about 30 %) R-1234ze(E) by weight, and from about 5 to about 40 % (e.g. about 10 to about 25 %) R-1243zf by weight, based on the total weight of the composition. A series of such quaternary blends is set out in the Examples.

The heat transfer compositions of the invention are suitable for use in existing designs of equipment, and are compatible with all classes of lubricant currently used with established HFC refrigerants. They may be optionally stabilized or compatibilized with mineral oils by the use of appropriate additives.

Preferably, when used in heat transfer equipment, the composition of the invention is combined with a lubricant.

Conveniently, the lubricant is selected from the group consisting of mineral oil, silicone oil, polyalkyl benzenes (PABs), polyol esters (POEs), polyalkylene glycols (PAGs), polyalkylene glycol esters (PAG esters), polyvinyl ethers (PVEs), poly (alpha-olefins) and combinations thereof.

Advantageously, the lubricant further comprises a stabiliser.

Preferably, the stabiliser is selected from the group consisting of diene-based compounds, phosphates, phenol compounds and epoxides, and mixtures thereof.

Conveniently, the refrigerant composition further comprises an additional flame retardant.

Advantageously, the additional flame retardant is selected from the group consisting of tri-(2-chloroethyl)-phosphate, (chloropropyl) phosphate, tri-(2,3-dibromopropyl)-phosphate, tri-(1,3-dichloropropyl)-phosphate, diammonium phosphate, various halogenated aromatic compounds, antimony oxide, aluminium trihydrate, polyvinyl chloride, a fluorinated iodocarbon, a fluorinated bromocarbon, trifluoro iodomethane, perfluoroalkyl amines, bromo-fluoroalkyl amines and mixtures thereof.

Preferably, the heat transfer composition is a refrigerant composition.

Preferably, the heat transfer device is a refrigeration device.

Conveniently, the heat transfer device is selected from group consisting of automotive air conditioning systems, residential air conditioning systems, commercial air conditioning systems, residential refrigerator systems, residential freezer systems, commercial refrigerator systems, commercial freezer systems, chiller air conditioning systems, chiller refrigeration systems, and commercial or residential heat pump systems. Preferably, the heat transfer device is a refrigeration device or an air-conditioning system.

Advantageously, the heat transfer device contains a centrifugal-type compressor.

The invention also provides the use of a composition of the invention in a heat transfer device as herein described.

According to a further aspect of the invention, there is provided a blowing agent comprising a composition of the invention.

According to another aspect of the invention, there is provided a foamable composition comprising one or more components capable of forming foam and a composition of the invention.

Preferably, the one or more components capable of forming foam are selected from polyurethanes, thermoplastic polymers and resins, such as polystyrene, and epoxy resins.

According to a further aspect of the invention, there is provided a foam obtainable from the foamable composition of the invention.

Preferably the foam comprises a composition of the invention.

According to another aspect of the invention, there is provided a sprayable composition comprising a material to be sprayed and a propellant comprising a composition of the invention.

According to a further aspect of the invention, there is provided a method for cooling an article which comprises condensing a composition of the invention and thereafter evaporating said composition in the vicinity of the article to be cooled.

According to another aspect of the invention, there is provided a method for heating an article which comprises condensing a composition of the invention in the vicinity of the article to be heated and thereafter evaporating said composition.

According to a further aspect of the invention, there is provided a method for extracting a substance from biomass comprising contacting the biomass with a solvent comprising a composition of the invention, and separating the substance from the solvent.

According to another aspect of the invention, there is provided a method of cleaning an article comprising contacting the article with a solvent comprising a composition of the invention.

According to a further aspect of the invention, there is provided a method for extracting a material from an aqueous solution comprising contacting the aqueous solution with a solvent comprising a composition of the invention, and separating the substance from the solvent.

According to another aspect of the invention, there is provided a method for extracting a material from a particulate solid matrix comprising contacting the particulate solid matrix with a solvent comprising a composition of the invention, and separating the substance from the solvent.

According to a further aspect of the invention, there is provided a mechanical power generation device containing a composition of the invention.

Preferably, the mechanical power generation device is adapted to use a Rankine Cycle or modification thereof to generate work from heat.

According to another aspect of the invention, there is provided a method of retrofitting a heat transfer device comprising the step of removing an existing heat transfer fluid, and introducing a composition of the invention. Preferably, the heat transfer device is a refrigeration device or (a static) air conditioning system. Advantageously, the method further comprises the step of obtaining an allocation of greenhouse gas (e.g. carbon dioxide) emission credit.

In a further aspect of the invention, there is provided a method for reducing the environmental impact arising from operation of a product comprising an existing compound or composition, the method comprising replacing at least partially the existing compound or composition with a composition of the invention. Preferably, this method comprises the step of obtaining an allocation of greenhouse gas emission credit.

By environmental impact we include the generation and emission of greenhouse warming gases through operation of the product.

As mentioned above, this environmental impact can be considered as including not only those emissions of compounds or compositions having a significant environmental impact from leakage or other losses, but also including the emission of carbon dioxide arising from the energy consumed by the device over its working life. Such environmental impact may be quantified by the measure known as Total Equivalent Warming Impact (TEWI). This measure has been used in quantification of the environmental impact of certain stationary refrigeration and air conditioning equipment, including for example supermarket refrigeration systems (see, for example, http://en.wikipedia.org/wiki/Total equivalent warming impact).

The environmental impact may further be considered as including the emissions of greenhouse gases arising from the synthesis and manufacture of the compounds or compositions. In this case the manufacturing emissions are added to the energy consumption and direct loss effects to yield the measure known as Life-Cycle Carbon Production (LCCP, see for example http://www.sae.org/events/aars/presentations/2007papasavva.pdf). The use of LCCP is common in assessing environmental impact of automotive air conditioning systems.

Emission credit(s) are awarded for reducing pollutant emissions that contribute to global warming and may, for example, be banked, traded or sold. They are conventionally expressed in the equivalent amount of carbon dioxide. Thus if the emission of 1 kg of R-407A is avoided then an emission credit of 1x1990 = 1990 kg CO₂ equivalent may be awarded.

The compositions of invention can be used in a method for generating greenhouse gas emission credit(s) comprising (i) replacing an existing compound or composition with a composition of the invention, wherein the composition of the invention has a lower GWP than the existing compound or composition; and (ii) obtaining greenhouse gas emission credit for said replacing step.

Preferably, the use of the composition of the invention results in the equipment having a lower Total Equivalent Warming Impact, and/or a lower Life-Cycle Carbon Production than that which would be attained by use of the existing compound or composition.

These methods may be carried out on any suitable product, for example in the fields of air-conditioning, refrigeration (e.g. low and medium temperature refrigeration), heat transfer, blowing agents, aerosols or sprayable propellants, gaseous dielectrics, cryosurgery, veterinary procedures, dental procedures, fire extinguishing, flame suppression, solvents (e.g. carriers for flavorings and fragrances), cleaners, air horns, pellet guns, topical anesthetics, and expansion applications. Preferably, the field is air-conditioning or refrigeration.

Examples of suitable products include a heat transfer devices, blowing agents, foamable compositions, sprayable compositions, solvents and mechanical power generation devices. In a preferred embodiment, the product is a heat transfer device, such as a refrigeration device or an air-conditioning unit.

The existing compound or composition has an environmental impact as measured by GWP and/or TEWI and/or LCCP that is higher than the composition of the invention which replaces it. The existing compound or composition may comprise a fluorocarbon compound, such as a perfluoro-, hydrofluoro-, chlorofluoro- or hydrochlorofluoro-carbon compound or it may comprise a fluorinated olefin.

Preferably, the existing compound or composition is a heat transfer compound or composition such as a refrigerant. Examples of refrigerants that may be replaced include R-134a, R-152a, R-1234yf, R-410A, R-407A, R-407B, R-407C, R-507, R-22 and R-404A.

Any amount of the existing compound or composition may be replaced so as to reduce the environmental impact. This may depend on the environmental impact of the existing compound or composition being replaced and the environmental impact of the replacement composition of the invention. Preferably, the existing compound or composition in the product is fully replaced by the composition of the invention.

### Examples

The performance of selected compositions of the invention was evaluated in a theoretical model of a vapour compression cycle. The model used experimentally measured data for vapour pressure and vapour liquid equilibrium behaviour of mixtures, regressed to the Peng Robinson equation of state, together with correlations for ideal gas enthalpy of each component to calculate the relevant thermodynamic properties of the fluids. The model was implemented in the Matlab software package sold in the United Kingdom by The Mathworks Ltd. The ideal gas enthalpies of R-32 and R-134a were taken from public domain measured information, namely the NIST Fluid Properties Database as embodied in the software package REFPROP v8.0. Reliable estimation techniques based on the group contribution method of Joback as described in "The Properties of Gases and Liquids" 5^{th} edition by Poling et al. (which is herein incorporated by reference) were used to estimate the temperature variation of ideal gas enthalpy for the fluorinated olefins. In addition the ideal gas heat capacity of R-1234yf and R-1234ze(E) was experimentally determined over a range of temperatures. The results showed the Joback predictive method gave acceptable accuracy for the heat capacity of fluorinated propenes.

These calculations were performed following the standard approach as used in (for example) the INEOS Fluor "KleaCalc" software (other available models for predicting the performance of refrigeration and air conditioning systems known to the skilled person in the art may also be used), using the following conditions:

| | |
|---|---|
| Mean evaporating temperature: | 5°C |
| Mean condensing temperature: | 50°C |
| Evaporator superheat: | 10K |
| Condenser subcool | 5K |
| Evaporator pressure drop | 0 bar |
| Suction line pressure drop | 0 bar |
| Condenser pressure drop | 0 bar |
| Cooling duty | 6 kW |
| Compressor suction temperature | 15°C |
| Compressor isentropic efficiency | 67% |

The relative pressure drop characteristics of the fluids at suction line conditions were evaluated using the Darcy-Weisbach equation for incompressible fluid pressure drop, using the Colebrook relation for frictional pressure drop and assuming the following:
Constant cooling capacity (6 kW as above)
Effective internal diameter of suction pipe: 16.2mm
Suction pipe assumed smooth internally.
Gas density evaluated at compressor suction temperature and pressure
Gas assumed incompressible
Gas viscosity taken as equivalent to that of R-134a at same temperature and pressure.

The forms of the Darcy-Weisbach and Colebrook equations were taken from the ASHRAE Handbook (2001 Fundamentals Volume) Section 2, which is herein incorporated by reference.

Table 1 shows the comparative performance for pure fluids R-1234yf, R-134a and R-1243zf.

**Table 1**

| | | R-134a | R-1243zf | R-1234ze(E) |
|---|---|---|---|---|
| | | 0% | 0% | 0% |
| | | 100% | 0% | 0% |
| | | 0% | 0% | 0% |
| | | 0% | 0% | 100% |
| | | | | |

| **Property** | **Units** | | | |
|---|---|---|---|---|
| Pressure ratio | | 3.79 | 3.58 | 3.81 |
| Volumetric efficiency | | 90.2% | 90.5% | 89.9% |
| Condenser glide | K | 0.0 | 0.0 | 0.0 |
| Evaporator glide | K | 0.0 | 0.0 | 0.0 |
| Evaporator inlet temperature | °C | 5.0 | 5.0 | 5.0 |
| Condenser exit temperature | °C | 45.0 | 45.0 | 45.0 |
| Condenser pressure | bar | 13.21 | 11.32 | 9.38 |
| Evaporator pressure | bar | 3.48 | 3.16 | 2.46 |
| Refrigeration effect | kJ/kg | 147.70 | 148.09 | 137.67 |
| COP | | 3.36 | 3.36 | 3.44 |
| Discharge temperature | °C | 77.4 | 71.4 | 71.0 |
| Mass flow rate | kg/hr | 146 | 146 | 157 |
| Volumetric flow rate | m³/hr | 9.11 | 10.60 | 12.55 |
| Volumetric capacity | kJ/m³ | 2372 | 2037 | 1721 |
| Specific pressure drop | Pa/m | 578 | 671 | 839 |
| | | | | |
| Pressure drop relative to R-134a | | 100% | 116% | 145% |
| Capacity relative to R-134a | | 100% | 86% | 73% |
| COP relative to R-134a | | 100% | 100% | 102% |

It can be seen that the pressure drop and capacity characteristics of both R-1243zf and R-1234ze are worse as compared to R-134a.

Performance data (calculated using the above methods) of some ternary R-32/R-1234ze(E)/R-1243zf and quaternary R-32/R-1234ze(E)/R-1243zf/R-134a blends of the invention are set out in Tables 2 to 9. The compositions in Table 2 are believed to be non flammable.

The examples are illustrative only and non-limiting. The invention is defined by the claims.

**Table 2**

| R32/R134a/R1234ze(E)/R1243zf (w/w) | | 0/79/0/21 | 4/60/20/16 | 4/51/27/17 | 5/54/25/16 | 6/55/23/16 | | 48/52 R134a/R1234yf* |
|---|---|---|---|---|---|---|---|---|
| GWP | | 1028 | 805 | 689 | 735 | 747 | | 626 |
| Fluorine ratio F/(F+H) | | 0.63 | 0.63 | 0.63 | 0.63 | 0.63 | | 0.67 |
| | | | | | | | | |

| **Property** | **Units** | | | | | | | |
|---|---|---|---|---|---|---|---|---|
| Pressure ratio | | 3.72 | 3.74 | 3.73 | 3.73 | 3.73 | | 3.61 |
| Volumetric efficiency | | 90.3% | 90.3% | 90.3% | 90.4% | 90.4% | | 90.5% |
| Condenser glide | K | 0.0 | 2.3 | 2.5 | 2.8 | 3.1 | | 0.0 |
| Evaporator glide | K | 0.0 | 1.5 | 1.6 | 1.8 | 2.1 | | 0.0 |
| Evaporator inlet temperature | °C | 5.0 | 4.2 | 4.2 | 4.1 | 4.0 | | 5.0 |
| Condenser exit temperature | °C | 45.0 | 43.8 | 43.8 | 43.6 | 43.4 | | 45.0 |
| Condenser pressure | bar | 12.99 | 13.27 | 13.13 | 13.44 | 13.69 | | 13.64 |
| Evaporator pressure | bar | 3.49 | 3.55 | 3.52 | 3.60 | 3.67 | | 3.78 |
| Refrigeration effect | kJ/kg | 146.33 | 151.19 | 151.04 | 152.41 | 153.78 | | 128.87 |
| COP | | 3.35 | 3.37 | 3.37 | 3.37 | 3.37 | | 3.30 |
| Discharge temperature | °C | 75.8 | 77.4 | 76.9 | 77.7 | 78.4 | | 74.5 |
| Mass flow rate | kg/hr | 148 | 143 | 143 | 142 | 140 | | 168 |
| Volumetric flow rate | m³/hr | 9.27 | 9.01 | 9.11 | 8.90 | 8.72 | | 8.98 |
| Volumetric capacity | kJ/m³ | 2331 | 2398 | 2372 | 2428 | 2476 | | 2406 |
| Specific pressure drop | Pa/m | 592 | 562 | 568 | 551 | 537 | | 631 |
| | | | | | | | | |
| Pressure drop relative to R-134a | | 102.5% | 97.2% | 98.3% | 95.4% | 92.9% | | 109.2% |
| Capacity relative to R-134a | | 98.3% | 101.1% | 100.0% | 102.3% | 104.4% | | 101.4% |
| COP relative to R-134a | | 99.7% | 100.3% | 100.3% | 100.3% | 100.3% | | 98.1% |

| | | | | | | | | |
|---|---|---|---|---|---|---|---|---|
| *Comparative example: R-134a/R-1234yf non flammable binary composition | | | | | | | | |

**Table 3**

| | **MIXTURE PERFORMANCE - 6% R-32** | | | | | | | | | | |
|---|---|---|---|---|---|---|---|---|---|---|---|
| | | (COMPOSITION IN PERCENT BY WEIGHT) | | | | | | | | | |
| | R-32 | 6% | 6% | 6% | 6% | 6% | 6% | 6% | 6% | 6% | 6% |
| | R-1243zf | 94% | 84% | 74% | 64% | 54% | 44% | 34% | 24% | 14% | 0% |
| | R-1234ze(E) | 0% | 10% | 20% | 30% | 40% | 50% | 60% | 70% | 80% | 94% |
| | | | | | | | | | | | |

| **Property** | **Units** | | | | | | | | | | |
|---|---|---|---|---|---|---|---|---|---|---|---|
| Pressure ratio | | 3.62 | 3.64 | 3.66 | 3.69 | 3.71 | 3.74 | 3.76 | 3.79 | 3.81 | 3.85 |
| Volumetric efficiency | | 90.5% | 90.5% | 90.4% | 90.4% | 90.3% | 90.2% | 90.2% | 90.1% | 90.0% | 89.9% |
| Condenser glide | K | 3.8 | 4.0 | 4.2 | 4.3 | 4.4 | 4.6 | 4.7 | 4.7 | 4.8 | 4.8 |
| Evaporator glide | K | 2.3 | 2.4 | 2.6 | 2.7 | 2.8 | 2.8 | 2.9 | 2.9 | 2.9 | 2.9 |
| Evaporator inlet temperature | °C | 3.9 | 3.8 | 3.7 | 3.7 | 3.6 | 3.6 | 3.5 | 3.5 | 3.5 | 3.6 |
| Condenser exit temperature | °C | 43.1 | 43.0 | 42.9 | 42.8 | 42.8 | 42.7 | 42.7 | 42.6 | 42.6 | 42.6 |
| Condenser pressure | bar | 12.93 | 12.75 | 12.56 | 12.37 | 12.18 | 11.97 | 11.77 | 11.55 | 11.33 | 11.01 |
| Evaporator pressure | bar | 3.57 | 3.50 | 3.43 | 3.35 | 3.28 | 3.21 | 3.13 | 3.05 | 2.97 | 2.86 |
| Refrigeration effect | kJ/kg | 156.40 | 155.64 | 154.86 | 154.07 | 153.27 | 152.45 | 151.61 | 150.75 | 149.87 | 148.59 |
| COP | | 3.36 | 3.37 | 3.38 | 3.38 | 3.39 | 3.40 | 3.41 | 3.42 | 3.43 | 3.45 |
| Discharge temperature | °C | 75.3 | 75.4 | 75.4 | 75.4 | 75.5 | 75.5 | 75.5 | 75.6 | 75.6 | 75.6 |
| Mass flow rate | kg/hr | 138 | 139 | 139 | 140 | 141 | 142 | 142 | 143 | 144 | 145 |
| Volumetric flow rate | m³/hr | 9.28 | 9.39 | 9.51 | 9.63 | 9.77 | 9.91 | 10.06 | 10.22 | 10.40 | 10.67 |
| Volumetric capacity | kJ/m³ | 2326 | 2299 | 2271 | 2242 | 2212 | 2180 | 2147 | 2113 | 2077 | 2024 |
| Specific pressure drop | Pa/m | 564 | 573 | 582 | 592 | 603 | 614 | 626 | 639 | 653 | 674 |
| | | | | | | | | | | | |
| Pressure drop relative to R-134a | | 98% | 99% | 101% | 103% | 104% | 106% | 108% | 111% | 113% | 117% |
| Capacity relative to R-134a | | 98% | 97% | 96% | 95% | 93% | 92% | 91% | 89% | 88% | 85% |
| COP relative to R-134a | | 100% | 100% | 100% | 101% | 101% | 101% | 102% | 102% | 102% | 102% |

**Table 4**

| | **MIXTURE PERFORMANCE - 8% R-32** | | | | | | | | | | |
|---|---|---|---|---|---|---|---|---|---|---|---|
| | | (COMPOSITION IN PERCENT BY WEIGHT) | | | | | | | | | |
| | R-32 | 8% | 8% | 8% | 8% | 8% | 8% | 8% | 8% | 8% | 8% |
| | R-1243zf | 92% | 82% | 72% | 62% | 52% | 42% | 32% | 22% | 12% | 0% |
| | R-1234ze(E) | 0% | 10% | 20% | 30% | 40% | 50% | 60% | 70% | 80% | 92% |
| | | | | | | | | | | | |

| **Property** | **Units** | | | | | | | | | | |
|---|---|---|---|---|---|---|---|---|---|---|---|
| Pressure ratio | | 3.62 | 3.64 | 3.67 | 3.69 | 3.71 | 3.74 | 3.76 | 3.79 | 3.82 | 3.85 |
| Volumetric efficiency | | 90.6% | 90.5% | 90.5% | 90.4% | 90.3% | 90.3% | 90.2% | 90.1% | 90.1% | 90.0% |
| Condenser glide | K | 4.8 | 4.9 | 5.1 | 5.3 | 5.5 | 5.6 | 5.7 | 5.8 | 5.9 | 6.0 |
| Evaporator glide | K | 2.9 | 3.1 | 3.3 | 3.4 | 3.5 | 3.6 | 3.7 | 3.7 | 3.7 | 3.7 |
| Evaporator inlet temperature | °C | 3.5 | 3.4 | 3.4 | 3.3 | 3.2 | 3.2 | 3.2 | 3.1 | 3.1 | 3.1 |
| Condenser exit temperature | °C | 42.6 | 42.5 | 42.4 | 42.4 | 42.3 | 42.2 | 42.1 | 42.1 | 42.0 | 42.0 |
| Condenser pressure | bar | 13.45 | 13.26 | 13.07 | 12.88 | 12.68 | 12.47 | 12.26 | 12.04 | 11.82 | 11.54 |
| Evaporator pressure | bar | 3.71 | 3.64 | 3.57 | 3.49 | 3.41 | 3.34 | 3.26 | 3.18 | 3.10 | 3.00 |
| Refrigeration effect | kJ/kg | 158.89 | 158.19 | 157.48 | 156.76 | 156.02 | 155.27 | 154.50 | 153.72 | 152.91 | 151.90 |
| COP | | 3.36 | 3.37 | 3.38 | 3.39 | 3.40 | 3.41 | 3.42 | 3.43 | 3.44 | 3.45 |
| Discharge temperature | °C | 76.5 | 76.6 | 76.6 | 76.7 | 76.7 | 76.8 | 76.8 | 76.9 | 76.9 | 77.0 |
| Mass flow rate | kg/hr | 136 | 137 | 137 | 138 | 138 | 139 | 140 | 141 | 141 | 142 |
| Volumetric flow rate | m³/hr | 8.92 | 9.02 | 9.12 | 9.24 | 9.36 | 9.49 | 9.63 | 9.79 | 9.95 | 10.17 |
| Volumetric capacity | kJ/m³ | 2422 | 2395 | 2367 | 2338 | 2307 | 2275 | 2242 | 2207 | 2171 | 2125 |
| Specific pressure drop | Pa/m | 535 | 543 | 552 | 560 | 570 | 580 | 591 | 602 | 615 | 631 |
| | | | | | | | | | | | |
| Pressure drop relative to R-134a | | 95% | 96% | 98% | 99% | 101% | 103% | 105% | 107% | 109% | 112% |
| Capacity relative to R-134a | | 104% | 103% | 102% | 100% | 99% | 98% | 96% | 95% | 93% | 91% |
| COP relative to R-134a | | 100% | 100% | 101% | 101% | 101% | 102% | 102% | 102% | 102% | 103% |

**Table 5**

| | **MIXTURE PERFORMANCE - 10% R-32** | | | | | | | | | | |
|---|---|---|---|---|---|---|---|---|---|---|---|
| | | (COMPOSITION IN PERCENT BY WEIGHT) | | | | | | | | | |
| | R-32 | 10% | 10% | 10% | 10% | 10% | 10% | 10% | 10% | 10% | 10% |
| | R-1243zf | 90% | 80% | 70% | 60% | 50% | 40% | 30% | 20% | 10% | 0% |
| | R-1234ze(E) | 0% | 10% | 20% | 30% | 40% | 50% | 60% | 70% | 80% | 90% |
| | | | | | | | | | | | |

| **Property** | **Units** | | | | | | | | | | |
|---|---|---|---|---|---|---|---|---|---|---|---|
| Pressure ratio | | 3.84 | 3.82 | 3.79 | 3.76 | 3.74 | 3.71 | 3.69 | 3.66 | 3.64 | 3.62 |
| Volumetric efficiency | | 90.1% | 90.1% | 90.2% | 90.3% | 90.3% | 90.4% | 90.5% | 90.5% | 90.6% | 90.6% |
| Condenser glide | K | 6.9 | 6.9 | 6.8 | 6.6 | 6.5 | 6.3 | 6.1 | 5.9 | 5.7 | 5.5 |
| Evaporator glide | K | 4.5 | 4.5 | 4.5 | 4.4 | 4.3 | 4.2 | 4.1 | 3.9 | 3.7 | 3.6 |
| Evaporator inlet temperature | °C | 2.8 | 2.8 | 2.8 | 2.8 | 2.8 | 2.9 | 3.0 | 3.0 | 3.1 | 3.2 |
| Condenser exit temperature | °C | 41.5 | 41.6 | 41.6 | 41.7 | 41.8 | 41.8 | 41.9 | 42.0 | 42.1 | 42.2 |
| Condenser pressure | bar | 12.05 | 12.29 | 12.52 | 12.75 | 12.96 | 13.17 | 13.38 | 13.58 | 13.77 | 13.96 |
| Evaporator pressure | bar | 3.14 | 3.22 | 3.31 | 3.39 | 3.47 | 3.55 | 3.63 | 3.70 | 3.78 | 3.86 |
| Refrigeration effect | kJ/kg | 155.07 | 155.83 | 156.57 | 157.28 | 157.98 | 158.66 | 159.32 | 159.98 | 160.62 | 161.25 |
| COP | | 3.45 | 3.44 | 3.43 | 3.42 | 3.41 | 3.40 | 3.39 | 3.38 | 3.37 | 3.36 |
| Discharge temperature | °C | 78.3 | 78.2 | 78.2 | 78.1 | 78.0 | 77.9 | 77.8 | 77.8 | 77.7 | 77.6 |
| Mass flow rate | kg/hr | 139 | 139 | 138 | 137 | 137 | 136 | 136 | 135 | 134 | 134 |
| Volumetric flow rate | m³/hr | 9.71 | 9.54 | 9.39 | 9.25 | 9.11 | 8.99 | 8.88 | 8.77 | 8.67 | 8.58 |
| Volumetric capacity | kJ/m³ | 2225 | 2264 | 2301 | 2336 | 2370 | 2402 | 2433 | 2462 | 2491 | 2518 |
| Specific pressure drop | Pa/m | 594 | 581 | 570 | 559 | 550 | 541 | 532 | 524 | 517 | 509 |
| | | | | | | | | | | | |
| Pressure drop relative to R-134a | | 111% | 109% | 106% | 104% | 103% | 101% | 99% | 98% | 96% | 95% |
| Capacity relative to R-134a | | 92% | 93% | 95% | 96% | 98% | 99% | 100% | 102% | 103% | 104% |
| COP relative to R-134a | | 103% | 103% | 102% | 102% | 102% | 101% | 101% | 101% | 100% | 100% |

**Table 6**

| | **MIXTURE PERFORMANCE - 4% R-32, 8% R-134a** | | | | | | | | | | |
|---|---|---|---|---|---|---|---|---|---|---|---|
| | | (COMPOSITION IN PERCENT BY WEIGHT) | | | | | | | | | |
| | R-32 | 4% | 4% | 4% | 4% | 4% | 4% | 4% | 4% | 4% | 4% |
| | R-134a | 8% | 8% | 8% | 8% | 8% | 8% | 8% | 8% | 8% | 8% |
| | R-1243zf | 88% | 78% | 68% | 58% | 48% | 38% | 28% | 18% | 8% | 0% |
| | R-1234ze(E) | 0% | 10% | 20% | 30% | 40% | 50% | 60% | 70% | 80% | 88% |
| | | | | | | | | | | | |

| **Property** | **Units** | | | | | | | | | | |
|---|---|---|---|---|---|---|---|---|---|---|---|
| Pressure ratio | | 3.62 | 3.64 | 3.66 | 3.69 | 3.71 | 3.74 | 3.77 | 3.79 | 3.82 | 3.84 |
| Volumetric efficiency | | 90.5% | 90.5% | 90.4% | 90.3% | 90.3% | 90.2% | 90.1% | 90.0% | 90.0% | 89.9% |
| Condenser glide | K | 2.7 | 2.8 | 3.0 | 3.1 | 3.2 | 3.3 | 3.4 | 3.5 | 3.5 | 3.5 |
| Evaporator glide | K | 1.5 | 1.7 | 1.8 | 1.9 | 2.0 | 2.1 | 2.1 | 2.1 | 2.1 | 2.0 |
| Evaporator inlet temperature | °C | 4.2 | 4.2 | 4.1 | 4.0 | 4.0 | 4.0 | 3.9 | 3.9 | 4.0 | 4.0 |
| Condenser exit temperature | °C | 43.7 | 43.6 | 43.5 | 43.4 | 43.4 | 43.3 | 43.3 | 43.3 | 43.2 | 43.3 |
| Condenser pressure | bar | 12.60 | 12.42 | 12.22 | 12.03 | 11.82 | 11.61 | 11.40 | 11.18 | 10.95 | 10.77 |
| Evaporator pressure | bar | 3.48 | 3.41 | 3.34 | 3.26 | 3.18 | 3.11 | 3.03 | 2.95 | 2.87 | 2.80 |
| Refrigeration effect | kJ/kg | 153.22 | 152.47 | 151.72 | 150.94 | 150.15 | 149.34 | 148.51 | 147.66 | 146.78 | 146.05 |
| COP | | 3.35 | 3.36 | 3.37 | 3.38 | 3.39 | 3.40 | 3.41 | 3.42 | 3.43 | 3.44 |
| Discharge temperature | °C | 74.4 | 74.5 | 74.5 | 74.5 | 74.6 | 74.6 | 74.6 | 74.7 | 74.7 | 74.7 |
| Mass flow rate | kg/hr | 141 | 142 | 142 | 143 | 144 | 145 | 145 | 146 | 147 | 148 |
| Volumetric flow rate | m³/hr | 9.53 | 9.65 | 9.78 | 9.92 | 10.07 | 10.22 | 10.39 | 10.58 | 10.77 | 10.94 |
| Volumetric capacity | kJ/m³ | 2267 | 2238 | 2209 | 2178 | 2146 | 2113 | 2078 | 2042 | 2005 | 1974 |
| Specific pressure drop | Pa/m | 588 | 598 | 608 | 619 | 631 | 643 | 657 | 671 | 687 | 700 |
| | | | | | | | | | | | |
| Pressure drop relative to R-134a | | 102% | 103% | 105% | 107% | 109% | 111% | 114% | 116% | 119% | 121% |
| Capacity relative to R-134a | | 96% | 94% | 93% | 92% | 90% | 89% | 88% | 86% | 85% | 83% |
| COP relative to R-134a | | 100% | 100% | 100% | 101% | 101% | 101% | 101% | 102% | 102% | 102% |

**Table 7**

| | **MIXTURE PERFORMANCE - 6% R-32, 7% R-134a** | | | | | | | | | | |
|---|---|---|---|---|---|---|---|---|---|---|---|
| | | (COMPOSITION IN PERCENT BY WEIGHT) | | | | | | | | | |
| | R-32 | 6% | 6% | 6% | 6% | 6% | 6% | 6% | 6% | 6% | 6% |
| | R-134a | 7% | 7% | 7% | 7% | 7% | 7% | 7% | 7% | 7% | 7% |
| | R-1243zf | 87% | 77% | 67% | 57% | 47% | 37% | 27% | 17% | 7% | 0% |
| | R-1234ze(E) | 0% | 10% | 20% | 30% | 40% | 50% | 60% | 70% | 80% | 87% |
| | | | | | | | | | | | |

| **Property** | **Units** | | | | | | | | | | |
|---|---|---|---|---|---|---|---|---|---|---|---|
| Pressure ratio | | 3.62 | 3.65 | 3.67 | 3.69 | 3.72 | 3.75 | 3.77 | 3.80 | 3.83 | 3.85 |
| Volumetric efficiency | | 90.5% | 90.5% | 90.4% | 90.4% | 90.3% | 90.2% | 90.1% | 90.1% | 90.0% | 89.9% |
| Condenser glide | K | 3.7 | 3.9 | 4.1 | 4.2 | 4.4 | 4.5 | 4.6 | 4.7 | 4.7 | 4.8 |
| Evaporator glide | K | 2.2 | 2.4 | 2.5 | 2.7 | 2.8 | 2.9 | 2.9 | 2.9 | 2.9 | 2.9 |
| Evaporator inlet temperature | °C | 3.9 | 3.8 | 3.7 | 3.7 | 3.6 | 3.6 | 3.5 | 3.5 | 3.5 | 3.6 |
| Condenser exit temperature | °C | 43.1 | 43.0 | 43.0 | 42.9 | 42.8 | 42.7 | 42.7 | 42.7 | 42.6 | 42.6 |
| Condenser pressure | bar | 13.10 | 12.91 | 12.72 | 12.52 | 12.31 | 12.10 | 11.88 | 11.66 | 11.43 | 11.26 |
| Evaporator pressure | bar | 3.62 | 3.54 | 3.47 | 3.39 | 3.31 | 3.23 | 3.15 | 3.07 | 2.99 | 2.93 |
| Refrigeration effect | kJ/kg | 155.87 | 155.18 | 154.48 | 153.77 | 153.04 | 152.29 | 151.52 | 150.73 | 149.92 | 149.33 |
| COP | | 3.35 | 3.36 | 3.37 | 3.39 | 3.40 | 3.41 | 3.42 | 3.43 | 3.44 | 3.44 |
| Discharge temperature | °C | 75.6 | 75.7 | 75.7 | 75.8 | 75.8 | 75.9 | 75.9 | 76.0 | 76.0 | 76.0 |
| Mass flow rate | kg/hr | 139 | 139 | 140 | 140 | 141 | 142 | 143 | 143 | 144 | 145 |
| Volumetric flow rate | m³/hr | 9.16 | 9.27 | 9.39 | 9.52 | 9.65 | 9.80 | 9.96 | 10.12 | 10.31 | 10.44 |
| Volumetric capacity | kJ/m³ | 2358 | 2329 | 2300 | 2269 | 2237 | 2204 | 2170 | 2133 | 2096 | 2068 |
| Specific pressure drop | Pa/m | 558 | 567 | 576 | 586 | 596 | 607 | 619 | 632 | 646 | 657 |
| | | | | | | | | | | | |
| Pressure drop relative to R-134a | | 97% | 98% | 100% | 101% | 103% | 105% | 107% | 110% | 112% | 114% |
| Capacity relative to R-134a | | 99% | 98% | 97% | 96% | 94% | 93% | 91% | 90% | 88% | 87% |
| COP relative to R-134a | | 100% | 100% | 100% | 101% | 101% | 101% | 102% | 102% | 102% | 102% |

**Table 8**

| | **MIXTURE PERFORMANCE - 8% R-32, 6% R-134a** | | | | | | | | | | |
|---|---|---|---|---|---|---|---|---|---|---|---|
| | | (COMPOSITION IN PERCENT BY WEIGHT) | | | | | | | | | |
| | R-32 | 8% | 8% | 8% | 8% | 8% | 8% | 8% | 8% | 8% | 8% |
| | R-134a | 6% | 6% | 6% | 6% | 6% | 6% | 6% | 6% | 6% | 6% |
| | R-1243zf | 86% | 76% | 66% | 56% | 46% | 36% | 26% | 16% | 6% | 0% |
| | R-1234ze(E) | 0% | 10% | 20% | 30% | 40% | 50% | 60% | 70% | 80% | 86% |
| | | | | | | | | | | | |

| **Property** | **Units** | | | | | | | | | | |
|---|---|---|---|---|---|---|---|---|---|---|---|
| Pressure ratio | | 3.62 | 3.65 | 3.67 | 3.70 | 3.72 | 3.75 | 3.77 | 3.80 | 3.83 | 3.85 |
| Volumetric efficiency | | 90.6% | 90.5% | 90.5% | 90.4% | 90.3% | 90.3% | 90.2% | 90.1% | 90.1% | 90.0% |
| Condenser glide | K | 4.6 | 4.8 | 5.0 | 5.2 | 5.3 | 5.5 | 5.6 | 5.7 | 5.8 | 5.9 |
| Evaporator glide | K | 2.9 | 3.1 | 3.2 | 3.4 | 3.5 | 3.6 | 3.7 | 3.7 | 3.7 | 3.7 |
| Evaporator inlet temperature | °C | 3.6 | 3.5 | 3.4 | 3.3 | 3.3 | 3.2 | 3.2 | 3.2 | 3.1 | 3.2 |
| Condenser exit temperature | °C | 42.7 | 42.6 | 42.5 | 42.4 | 42.3 | 42.2 | 42.2 | 42.1 | 42.1 | 42.1 |
| Condenser pressure | bar | 13.60 | 13.40 | 13.21 | 13.00 | 12.79 | 12.58 | 12.36 | 12.13 | 11.89 | 11.75 |
| Evaporator pressure | bar | 3.75 | 3.67 | 3.60 | 3.52 | 3.44 | 3.36 | 3.28 | 3.19 | 3.11 | 3.06 |
| Refrigeration effect | kJ/kg | 158.41 | 157.77 | 157.13 | 156.48 | 155.81 | 155.12 | 154.42 | 153.70 | 152.95 | 152.48 |
| COP | | 3.36 | 3.37 | 3.38 | 3.39 | 3.40 | 3.41 | 3.42 | 3.43 | 3.44 | 3.45 |
| Discharge temperature | °C | 76.8 | 76.8 | 76.9 | 77.0 | 77.0 | 77.1 | 77.2 | 77.2 | 77.3 | 77.3 |
| Mass flow rate | kg/hr | 136 | 137 | 137 | 138 | 139 | 139 | 140 | 141 | 141 | 142 |
| Volumetric flow rate | m³/hr | 8.82 | 8.92 | 9.03 | 9.15 | 9.27 | 9.41 | 9.55 | 9.71 | 9.88 | 9.99 |
| Volumetric capacity | kJ/m³ | 2449 | 2421 | 2391 | 2361 | 2329 | 2296 | 2261 | 2224 | 2186 | 2162 |
| Specific pressure drop | Pa/m | 531 | 539 | 547 | 556 | 565 | 575 | 586 | 598 | 610 | 619 |
| | | | | | | | | | | | |
| Pressure drop relative to R-134a | | 92% | 93% | 95% | 96% | 98% | 100% | 101% | 104% | 106% | 107% |
| Capacity relative to R-134a | | 103% | 102% | 101% | 100% | 98% | 97% | 95% | 94% | 92% | 91% |
| COP relative to R-134a | | 100% | 100% | 100% | 101% | 101% | 101% | 102% | 102% | 102% | 102% |

**Table 9**

| | **MIXTURE PERFORMANCE - 10% R-32, 6% R-134a** | | | | | | | | | | |
|---|---|---|---|---|---|---|---|---|---|---|---|
| | | (COMPOSITION IN PERCENT BY WEIGHT) | | | | | | | | | |
| | R-32 | 10% | 10% | 10% | 10% | 10% | 10% | 10% | 10% | 10% | 10% |
| | R-134a | 6% | 6% | 6% | 6% | 6% | 6% | 6% | 6% | 6% | 6% |
| | R-1243zf | 84% | 74% | 64% | 54% | 44% | 34% | 24% | 14% | 4% | 0% |
| | R-1234ze(E) | 0% | 10% | 20% | 30% | 40% | 50% | 60% | 70% | 80% | 84% |
| | | | | | | | | | | | |
| **Property** | **Units** | | | | | | | | | | |
| Pressure ratio | | 3.62 | 3.64 | 3.67 | 3.69 | 3.72 | 3.74 | 3.77 | 3.80 | 3.83 | 3.84 |
| Volumetric efficiency | | 90.6% | 90.6% | 90.5% | 90.5% | 90.4% | 90.3% | 90.3% | 90.2% | 90.1% | 90.1% |
| Condenser glide | K | 5.3 | 5.6 | 5.8 | 6.0 | 6.2 | 6.3 | 6.5 | 6.6 | 6.7 | 6.8 |
| Evaporator glide | K | 3.5 | 3.7 | 3.8 | 4.0 | 4.1 | 4.3 | 4.4 | 4.4 | 4.4 | 4.4 |
| Evaporator inlet temperature | °C | 3.3 | 3.2 | 3.1 | 3.0 | 2.9 | 2.9 | 2.8 | 2.8 | 2.8 | 2.8 |
| Condenser exit temperature | °C | 42.3 | 42.2 | 42.1 | 42.0 | 41.9 | 41.8 | 41.8 | 41.7 | 41.6 | 41.6 |
| Condenser pressure | bar | 14.10 | 13.91 | 13.71 | 13.50 | 13.29 | 13.07 | 12.84 | 12.61 | 12.36 | 12.26 |
| Evaporator pressure | bar | 3.89 | 3.82 | 3.74 | 3.66 | 3.57 | 3.49 | 3.40 | 3.32 | 3.23 | 3.20 |
| Refrigeration effect | kJ/kg | 160.76 | 160.20 | 159.62 | 159.04 | 158.44 | 157.83 | 157.20 | 156.56 | 155.88 | 155.61 |
| COP | | 3.36 | 3.37 | 3.38 | 3.39 | 3.40 | 3.41 | 3.42 | 3.43 | 3.44 | 3.45 |
| Discharge temperature | °C | 77.9 | 78.0 | 78.1 | 78.1 | 78.2 | 78.3 | 78.4 | 78.5 | 78.6 | 78.6 |
| Mass flow rate | kg/hr | 134 | 135 | 135 | 136 | 136 | 137 | 137 | 138 | 139 | 139 |
| Volumetric flow rate | m³/hr | 8.49 | 8.59 | 8.69 | 8.80 | 8.91 | 9.04 | 9.17 | 9.32 | 9.48 | 9.55 |
| Volumetric capacity | kJ/m³ | 2544 | 2516 | 2486 | 2456 | 2423 | 2390 | 2354 | 2318 | 2279 | 2262 |
| Specific pressure drop | Pa/m | 505 | 512 | 520 | 528 | 536 | 545 | 555 | 566 | 577 | 582 |
| | | | | | | | | | | | |
| Pressure drop relative to R-134a | | 88% | 87% | 88% | 90% | 91% | 93% | 94% | 96% | 98% | 99% |
| Capacity relative to R-134a | | 107% | 111% | 110% | 108% | 107% | 105% | 104% | 102% | 101% | 100% |
| COP relative to R-134a | | 100% | 100% | 101% | 101% | 101% | 102% | 102% | 102% | 103% | 103% |

## Claims

1. A heat transfer composition comprising *E*-1,3,3,3-tetrafluoroprop-1-ene (R1234ze(E)), R1243zf (3,3,3-trifluoropropene) and R32 (difluoromethane).

2. A composition according to claim 1 containing from about 5 to about 95 % by weight of R1234ze(E), based on the total weight of the composition, and/or containing from about 5 to about 95 % by weight of R-1234zf, based on the total weight of the composition, and/or containing from about 1 to about 40 % by weight of R32, based on the total weight of the composition.

3. A composition according to claim 1 or 2 containing from about 5 to about 15 % R32 by weight, from about 5 to about 95 % R1234ze(E) by weight, and from about 5 to about 95 % R1243zf by weight, based on the total weight of the composition.

4. A composition according to claim 3 containing from about 5 to about 50 % R1234ze(E) by weight, and from about 35 to about 90 % R1243zf by weight.

5. A composition according to any of the preceding claims, further comprising a fourth component (iv) selected from R134a (1,1,1,2-tetrafluoroethane), R125 (pentafluoroethane), R-1234yf (2,3,3,3-tetrafluoropropene) and mixtures thereof.

6. A composition according to claim 5 wherein the fourth component is R134a, optionally wherein the fourth component is present in an amount of from about 1 to about 70 % by weight, based on the total weight of the composition.

7. A composition according to claim 6 containing from about 1 to about 15 % R32 by weight, from about 1 to about 15 % R134a by weight, from about 5 to about 95 % R1234ze(E) by weight, and from about 5 to about 95 % R1243zf by weight, based on the total weight of the composition.

8. A composition according to claim 7 containing from about 5 to about 50 % R1234ze(E) by weight, and from about 25 to about 92 % R1243zf by weight.

9. A composition according to claim 6 containing from about 1 to about 10 % R32 by weight, from about 40 to about 70 % R134a by weight, from about 10 to about 40 % R1234ze(E) by weight, and from about 5 to about 40 % R1243zf by weight, based on the total weight of the composition.

10. A composition according to any of the preceding claims, wherein the composition is less flammable than R1243zf alone wherein the composition has:
(a) a higher flammable limit;
(b) a higher ignition energy; and/or
(c) a lower flame velocity compared to R1243zf alone, optionally wherein the composition is non-flammable.

11. A composition according to any of the preceding claims further comprising a lubricant, optionally wherein the lubricant is selected from mineral oil, silicone oil, polyalkyl benzenes (PABs), polyol esters (POEs), polyalkylene glycols (PAGs), polyalkylene glycol esters (PAG esters), polyvinyl ethers (PVEs), poly (alpha-olefins) and combinations thereof.

12. A composition according to claim 11 further comprising a stabiliser, optionally wherein the stabiliser is selected from diene-based compounds, phosphates, phenol compounds and epoxides, and mixtures thereof.

13. A composition according to any of the preceding claims further comprising an additional flame retardant, optionally wherein the additional flame retardant is selected from the group consisting of tri-(2-chloroethyl)-phosphate, (chloropropyl) phosphate, tri-(2,3-dibromopropyl)-phosphate, tri-(1 ,3-dichloropropyl)-phosphate, diammonium phosphate, various halogenated aromatic compounds, antimony oxide, aluminium trihydrate, polyvinyl chloride, a fluorinated iodocarbon, a fluorinated bromocarbon, trifluoro iodomethane, perfluoroalkyl amines, bromo-fluoroalkyl amines and mixtures thereof.

14. A composition according to any of the preceding claims which is a refrigerant composition.

15. A heat transfer device containing a composition as defined in any one of claims 1 to 14.

16. Use of a composition defined in any of claims 1 to 14 in a heat transfer device.

17. A heat transfer device according to claim 15 which is a refrigeration device, optionally selected from group consisting of automotive air conditioning systems, residential air conditioning systems, commercial air conditioning systems, residential refrigerator systems, residential freezer systems, commercial refrigerator systems, commercial freezer systems, chiller air conditioning systems, chiller refrigeration systems, and commercial or residential heat pump systems, optionally wherein the heat transfer device contains a compressor.

18. A blowing agent comprising a composition as defined in any of claims 1 to 14.

19. A foamable composition comprising one or more components capable of forming foam and a composition as defined in any of claims 1 to 14 , wherein the one or more components capable of forming foam are selected from polyurethanes, thermoplastic polymers and resins, such as polystyrene, and epoxy resins, and mixtures thereof, or a foam obtainable from the foamable composition.

20. A sprayable composition comprising material to be sprayed and a propellant comprising a composition as defined in any of claims 1 to 14.

21. A method for cooling an article which comprises condensing a composition defined in any of claims 1 to 14 and thereafter evaporating the composition in the vicinity of the article to be cooled.

22. A method for heating an article which comprises condensing a composition as defined in any one of claims 1 to 14 in the vicinity of the article to be heated and thereafter evaporating the composition.

23. A method for extracting a substance from biomass comprising contacting biomass with a solvent comprising a composition as defined in any of claims 1 to 14, and separating the substance from the solvent.

24. A method of cleaning an article comprising contacting the article with a solvent comprising a composition as defined in any of Claims 1 to 14.

25. A method of extracting a material from an aqueous solution or a particulate solid matrix comprising contacting the aqueous solution with a solvent or the particulate solid matrix comprising a composition as defined in any of claims 1 to 14, and separating the material from the solvent.

26. A mechanical power generation device containing a composition as defined in any of claims 1 to 14, optionally wherein the device is adapted to use a Rankine Cycle or modification thereof to generate work from heat.

27. A method of retrofitting a heat transfer device comprising the step of removing an existing heat transfer fluid, and introducing a composition as defined in any one of claims 1 to 14, optionally wherein the heat transfer device is a refrigeration device, wherein the heat transfer device is an air conditioning system.

28. A method for reducing the environmental impact arising from the operation of a product comprising an existing compound or composition, the method comprising replacing at least partially the existing compound or composition with a composition as defined in any one of claims 1 to 14, optionally wherein the product is selected from a heat transfer device, a blowing agent, a foamable composition, a sprayable composition, a solvent or a mechanical power generation device, optionally wherein the product is a heat transfer device, optionally wherein the existing compound or composition is a heat transfer composition.

29. A method according to claim 28 wherein the heat transfer composition is a refrigerant selected from R134a, R1234yf and R152a, R22, R410A, R407A, R407B, R407C, R507 and R404a.

## Patentansprüche

1. Eine Wärmeübertragungszusammensetzung mit *E*-1,3,3,3-Tetrafluorprop-1-en (R1234ze(E)), R1243zf (3,3,3-Trifluorpropen) und R32 (Difluormethan)

2. Eine Zusammensetzung nach Anspruch 1, die von etwa 5 bis etwa 95 Gewichtsprozent R1234ze(E) bezogen auf das Gesamtgericht der Zusammensetzung enthält und/oder die von etwa 5 bis etwa 95 Gewichtsprozent R1243zf bezogen auf das Gesamtgewicht der Zusammensetzung enthält und/oder die von etwa 1 bis etwa 40 Gewichtsprozent R32 bezogen auf das Gesamtgewicht der Zusammensetzung enthält.

3. Eine Zusammensetzung nach Anspruch 1 oder 2, die von etwa 5 bis etwa 15 Gewichtsprozent R32, von etwa 5 bis etwa 95 Gewichtsprozent R1234ze(E) und von etwa 5 bis etwa 95 Gewichtsprozent R1243zf bezogen auf das Gesamtgewicht der Zusammensetzung enthält.

4. Eine Zusammensetzung nach Anspruch 3, die von etwa 5 bis etwa 50 Gewichtsprozent R1234ze(E) und von etwa 35 bis etwa 90 Gewichtsprozent R1243zf enthält.

5. Eine Zusammensetzung nach einem der vorhergehenden Ansprüche, die weiterhin eine vierte Komponente (iv) enthält, die aus R134a (1,1,1,2-Tetrafluorethan), R125 (Pentafluorethan), R-1234yf (2,3,3,3-Tetrafluorpropen) und Mischungen davon ausgewählt ist.

6. Eine Zusammensetzung nach Anspruch 5, wobei die vierte Komponente R134a ist, wobei die vierte Komponente optional in einer Menge von etwa 1 bis etwa 70 Gewichtsprozent bezogen auf das Gesamtgewicht der Zusammensetzung vorliegt.

7. Eine Zusammensetzung nach Anspruch 6, die von etwa 1 bis etwa 15 Gewichtsprozent R32, von etwa 1 bis etwa 15 Gewichtsprozent R134a, von etwa 5 bis etwa 95 Gewichtsprozent R 1234ze(E) und von etwa 5 bis etwa 95 Gewichtsprozent R 1243zf bezogen auf das Gesamtgewicht der Zusammensetzung enthält.

8. Eine Zusammensetzung nach Anspruch 7, die von etwa 5 bis etwa 50 Gewichtsprozent R1234ze(E) und von etwa 25 bis etwa 92 Gewichtsprozent R1243zf enthält.

9. Eine Zusammensetzung nach Anspruch 6, die von etwa 1 bis etwa 10 Gewichtsprozent R32, von etwa 40 bis etwa 70 Gewichtsprozent R134a, von etwa 10 bis etwa 40 Gewichtsprozent R1234ze(E) und von etwa 5 bis etwa 40 Gewichtsprozent R1243zf bezogen auf das Gesamtgewicht der Zusammensetzung aufweist.

10. Eine Zusammensetzung nach einem vorhergehenden Ansprüche, wobei die Zusammensetzung weniger entzündlich ist als R1243zf allein, wobei die Zusammensetzung aufweist:
a) einen höheren Entflammbarkeitsgrenzwert;
b) eine höhere Zündenergie und/oder
c) eine niedrigere Flammengeschwindigkeit verglichen mit R1243zf allein, wobei die Zusammensetzung optional nicht-brennbar ist.

11. Eine Zusammensetzung nach einem der vorhergehenden Ansprüche, die weiterhin ein Schmiermittel aufweist, wobei das Schmiermittel optional ausgewählt ist aus Mineralöl, Silikonöl, Polyalkylbenzenen (PAB), Polyolestern (POE), Polyalkylenglykolen (PAG), Polyalkylenglykolestern (PAG-Estern), Polyvinyläthern (PVE), Poly(alphaolefinen) und Kombinationen davon.

12. Eine Zusammensetzung nach Anspruch 11, die weiterhin einen Stabilisator aufweist, wobei der Stabilisator optional ausgewählt ist aus Dien-basierten Verbindungen, Phosphaten, Phenol-Verbindungen und Epoxiden und Mischungen davon.

13. Eine Zusammensetzung nach einem der vorhergebenden Ansprüche, die weiterhin ein zusätzliches Flammschutzmittel aufweist, wobei das zusätzliche Flammschutzmittel optional aus der Gruppe ausgewählt ist, welche besteht aus Tri-(2-Chlorethyl)-Phosphat, (Chlorpropyl)-Phosphat, Tri-(2,3-Dibrompropyl)-Phosphat, Tri-(1,3-Dichlorpropyl)-Phosphat, Diammoniumphosphat, verschiedenen halogenierten aromatischen Verbindungen, Antimonoxid, Aluminiumtrihydrat, Polyvinylchlorid, einem fluorinierten Jodkohlenwasserstoff, einem fluorinierten Bromkohlenwasserstoff, Trifluorjodmethan, Perfluoralkylaminen, Bromfluoralkylaminen und Mischungen davon.

14. Eine Zusammensetzung nach einem der vorhergehenden Ansprüche, die eine Kühlmittelzusammensetzung ist.

15. Eine Wärmeübertragungsvorrichtung, die eine Zusammensetzung enthält, wie sie in einem der Ansprüche 1 bis 14 definiert ist.

16. Verwendung einer Zusammensetzung, wie sie in einem der Ansprüche 1 bis 14 definiert ist, in einer Wärmeübertragungsvorrichtung.

17. Wärmeübertragungsvorrichtung nach Anspruch 15, die eine Kühlvorrichtung ist, welche optional aus der Gruppe ausgewählt ist, die aus Kraftfahrzeugklimaanlagen, Gebäudeklimaanlagen, Hausklimaanlagen, kommerziellen Klimaanalgen, Hauskühlanlagen, Hausgefrieranlagen, kommerziellen Kühlanlagen, kommerziellen Gefrieranlagen, Wärmetauscherklimaanlagen, Wärmetauscherkühlanlagen und kommerziellen oder Hauswärmepumpenanlagen besteht, wobei die Wärmeübertragungsvorrichtung optional einen Kompressor umfasst.

18. Ein Treibmittel mit einer Zusammensetzung wie in einem der Ansprüche 1 bis 14 definiert.

19. Eine schäumbare Zusammensetzung mit einer oder mehreren Komponenten, die geeignet sind, einen Schaum auszubilden, und einer Zusammensetzung, wie sie in einem der Ansprüche 1 bis 14 definiert ist, wobei die eine oder mehreren Komponenten, die in der Lage sind, einen Schaum auszubilden, aus Polyurethanen, thermoplastischen Polymeren und Harzen, wie beispielsweise Polystyrol, und Epoxidharzen und Mischungen davon ausgewählt sind, oder ein Schaum der von der schäumbaren Zusammensetzung erhältlich ist.

20. Eine versprühbare Zusammensetzung mit einem zu versprühenden Material und einem Treibmittel, das eine Zusammensetzung wie in einem der Ansprüche 1 bis 14 definiert aufweist.

21. Verfahren zum Kühlen eines Gegenstands, das das Kondensieren einer Zusammensetzung, wie sie in einem der Ansprüche 1 bis 14 definiert ist, und das anschließende Verdampfen der Zusammensetzung in der Nähe des zu kühlenden Artikels aufweist.

22. Ein Verfahren zum Erwärmen eines Artikels, das das Kondensieren einer Zusammensetzung, wie sie in einem der Ansprüche 1 bis 14 definiert ist, in der Nähe des zu erwärmenden Artikels und das anschließende Verdampfen der Zusammensetzung aufweist.

23. Ein Verfahren zum Extrahieren einer Substanz aus Biomasse, das das Kontaktieren der Biomasse mit einem Lösungsmittel, welches eine Zusammensetzung aufweist, wie sie in einem der Ansprüche 1 bis 14 definiert ist, und das Abtrennen der Substanz von dem Lösungsmittel aufweist.

24. Ein Verfahren zum Reinigen eines Gegenstands, das das Kontaktieren des Gegenstands mit einem Lösungsmittel aufweist, welches eine Zusammensetzung aufweist, wie sie in einem der Ansprüche 1 bis 14 definiert ist.

25. Ein Verfahren zum Extrahieren eines Materials aus einer wässrigen Lösung oder einer festen Teilchenmatrix, das das Kontaktieren der wässrigen Lösung oder festen Teilchenmatrix mit einem Lösungsmittel, welches eine Zusammensetzung aufweist, wie sie in einem der Ansprüche 1 bis 14 definiert ist, und das Abtrennen des Materials von dem Lösungsmittel aufweist.

26. Eine Vorrichtung zur Erzeugung mechanischer Leistung, die eine Zusammensetzung enthält, wie sie in einem der Ansprüche 1 bis 14 definiert ist, wobei die Vorrichtung optional geeignet ist, einen Rankine-Prozess oder eine Modifikation davon anzuwenden, um Arbeit aus Wärme zu erzeugen.

27. Ein Verfahren zum Nachrüsten einer Wärmeübertragungsvorrichtung, das den Schritt des Entfernens eines existierenden Wärmeübertragungsfluids und das Einführen einer Zusammensetzung aufweist, wie sie in einem der Ansprüche 1 bis 14 definiert ist, wobei die Wärmeübertragungsvorrichtung optional eine Kühlvorrichtung ist, wobei die Wärmeübertragungsvorrichtung eine Klimaanlage ist.

28. Ein Verfahren zum Reduzieren des Umwelteinflusses, der aus dem Betrieb eines Produkts resultiert, das eine bestehende Verbindung oder Zusammensetzung aufweist, wobei das Verfahren das zumindest teilweise Ersetzen der bestehenden Verbindung oder Zusammensetzung durch eine Zusammensetzung aufweist, wie sie in einem der Ansprüche 1 bis 14 definiert ist, und wobei das Produkt optional aus einer Wärmeübertragungsvorrichtung, einem Treibmittel, einer schäumbaren Zusammensetzung, einer versprühbaren Zusammensetzung, einem Lösungsmittel oder einer Vorrichtung zur Erzeugung mechanischer Leistung ausgewählt ist, wobei das Produkt optional eine Wärmeübertragungsvorrichtung ist, wobei die existierende Verbindung oder Zusammensetzung optional eine Wärmeübertragungszusammensetzung ist.

29. Verfahren nach Anspruch 28, wobei die Wärmeübertragungszusammensetzung ein Kühlmittel ist, das aus R134a, R1234yf und R152a, R22, R410A, R407A, R407B, R407C, R507 und R404a ausgewählt ist.

## Revendications

1. Composition de transfert thermique comprenant du *E*-1,3,3,3-tétrafluoroprop-1-ène (R1234ze(E)), du R1243zf (3,3,3-trifluoropropène) et du R32 (difluoro-méthane).

2. Composition selon la revendication 1 contenant d'environ 5 à environ 95 % en poids de R1234ze (E), sur la base du poids total de la composition, et/ou contenant d'environ 5 à environ 95 % en poids de R1234zf, sur la base du poids total de la composition, et/ou contenant d'environ 1 à environ 40 % en poids de R32, sur la base du poids total de la composition.

3. Composition selon la revendication 1 ou 2 contenant environ 5 à environ 15 % en poids de R32, environ 5 à environ 95 % en poids de R1234ze(E), et environ 5 à environ 95 % en poids de R1243zf, sur la base du poids total de la composition.

4. Composition selon la revendication 3 contenant environ 5 à environ 50 % en poids de R1234ze(E), et environ 35 à environ 90 % en poids de R1243zf.

5. Composition selon l'une quelconque des revendications précédentes, comprenant en outre un quatrième composé (iv) choisi parmi le R134a (1,1,1,2-tétrafluoroéthane), le R125 (pentafluoroéthane), le R-1234yf (2,3,3,3-tétrafluoropropène) et leurs mélanges.

6. Composition selon la revendication 5 dans laquelle le quatrième composant est le R134a, éventuellement dans laquelle le quatrième composant est présent en une quantité d'environ 1 à environ 70 % en poids, sur la base du poids total de la composition.

7. Composition selon la revendication 6 contenant environ 1 à environ 15 % en poids de R32, environ 1 à environ 15 % en poids de R134a, environ 5 à environ 95 % en poids de R1234ze(E), et environ 5 à environ 95 % en poids de R1243zf, sur la base du poids total de la composition.

8. Composition selon la revendication 7 contenant environ 5 à environ 50 % en poids de R1234ze(E), et environ 25 à environ 92 % en poids de R1243zf.

9. Composition selon la revendication 6 contenant environ 1 à environ 10 % en poids de R32, environ 40 à environ 70 % en poids de R134a, environ 10 à environ 40 % en poids de R1234ze(E), et environ 5 à environ 40 % en poids de R1243zf, sur la base du poids total de la composition.

10. Composition selon l'une quelconque des revendications précédentes, dans laquelle la composition est moins inflammable que le R1243zf seul, la composition ayant :
(a) une limite inflammable plus élevée ;
(b) une énergie d'allumage plus élevée ; et/ou
(c) une vitesse de flamme plus basse comparativement au R1243zf seul, la composition étant éventuellement non inflammable.

11. Composition selon l'une quelconque des revendications précédentes comprenant en outre un lubrifiant, éventuellement dans laquelle le lubrifiant est choisi parmi une huile minérale, l'huile de silicone, les polyalkylbenzènes (PAB), les esters de polyols (POE), les polyalkylène glycols (PAG), les esters de polyalkylène glycols (esters PAG), les éthers polyvinyliques (PVE), les poly(alpha-oléfines) et leurs combinaisons.

12. Composition selon la revendication 11 comprenant en outre un stabilisant, éventuellement dans laquelle le stabilisant est choisi parmi les composés à base de diènes, les phosphates, les composés phénoliques et les époxydes, et leurs mélanges.

13. Composition selon l'une quelconque des revendications précédentes comprenant en outre un retardateur de flamme supplémentaire, éventuellement dans laquelle le retardateur de flamme supplémentaire est choisi dans le groupe constitué par le tri-(2-chloroéthyl)-phosphate, le (chloropropyl) phosphate, le tri-(2,3-dibromopropyl)-phosphate, le tri-(1,3-dichloro-propyl)-phosphate, le diphosphate d'ammonium, divers composés aromatiques halogénés, l'oxyde d'antimoine, le trihydrate d'aluminium, le polychlorure de vinyle, un iodocarbone fluoré, un bromocarbone fluoré, le trifluoro-iodométhane, les amines perfluoroalkylées, les amines bromo-fluoroalkylées et leurs mélanges.

14. Composition selon l'une quelconque des revendications précédentes qui est une composition réfrigérante.

15. Dispositif de transfert thermique contenant une composition selon l'une quelconque des revendications 1 à 14.

16. Utilisation d'une composition selon l'une quelconque des revendications 1 à 14 dans un dispositif de transfert thermique.

17. Dispositif de transfert thermique selon la revendication 15 qui est un dispositif de réfrigération, éventuellement choisi dans le groupe constitué par les systèmes de climatisation automobile, les systèmes de climatisation à usage résidentiel, les systèmes de climatisation à usage commercial, les systèmes de réfrigération à usage résidentiel, les systèmes de congélation à usage résidentiel, les systèmes de réfrigération à usage commercial, les systèmes de congélation à usage commercial, les systèmes de climatisation à refroidisseur, et les systèmes à pompe à chaleur à usage commercial ou résidentiel, éventuellement dans lequel le dispositif de transfert thermique contient un compresseur.

18. Agent d'expansion comprenant une composition selon l'une quelconque des revendications 1 à 14.

19. Composition pouvant être expansée comprenant un ou plusieurs composants capables de former une mousse et une composition selon l'une quelconque des revendications 1 à 14, dans laquelle le ou les composants capables de former une mousse sont choisis parmi les polyuréthannes, les polymères et résines thermoplastiques, tels que le polystyrène, et les résines époxy, et leurs mélanges, ou mousse pouvant être obtenue à partir de la composition pouvant être expansée.

20. Composition pouvant être pulvérisée comprenant la substance à pulvériser et un propulsif comprenant une composition selon l'une quelconque des revendications 1 à 14.

21. Procédé de refroidissement d'un article qui comprend la condensation d'une composition selon l'une quelconque des revendications 1 à 14, puis l'évaporation de la composition au voisinage de l'article qui doit être refroidi.

22. Procédé de chauffage d'un article qui comprend la condensation d'une composition selon l'une quelconque des revendications 1 à 14 au voisinage de l'article qui doit être chauffé, puis l'évaporation de la composition.

23. Procédé d'extraction d'une substance à partir d'une biomasse comprenant la mise en contact de la biomasse avec un solvant comprenant une composition selon l'une quelconque des revendications 1 à 14, et la séparation de la substance contenue dans le solvant.

24. Procédé de nettoyage d'un article comprenant la mise en contact de l'article avec un solvant comprenant une composition selon l'une quelconque des revendications 1 à 14.

25. Procédé d'extraction d'une substance ou d'un matériau d'une solution aqueuse ou d'une matrice solide particulaire comprenant la mise en contact de la solution aqueuse ou de la matrice solide particulaire avec un solvant comprenant une composition selon l'une quelconque des revendications 1 à 14, et la séparation de la substance ou du matériau contenu(e) dans le solvant.

26. Dispositif de génération d'une puissance mécanique contenant une composition selon l'une quelconque des revendications 1 à 14, éventuellement dans lequel le dispositif est adapté pour être utilisé dans un cycle de Rankine ou une de ses variantes pour générer du travail à partir de chaleur.

27. Procédé de post-équipement d'un dispositif de transfert thermique comprenant l'étape d'élimination d'un fluide de transfert thermique existant, et d'introduction d'une composition selon l'une quelconque des revendications 1 à 14, éventuellement dans lequel le dispositif de transfert thermique est un dispositif de réfrigération, ou le dispositif de transfert thermique est un système de climatisation.

28. Procédé de réduction de l'impact sur l'environnement inhérent au fonctionnement d'un produit comprenant un composé ou une composition existant(e), le procédé comprenant le remplacement au moins partiel du composé ou de la composition existant (e) par une composition selon l'une quelconque des revendications 1 à 14, éventuellement dans lequel le produit est choisi parmi un dispositif de transfert thermique, un agent d'expansion, une composition pouvant être expansée, une composition pouvant être pulvérisée, un solvant ou un dispositif de génération d'une puissance mécanique, éventuellement dans lequel le produit est un dispositif de transfert thermique, et éventuellement dans lequel le composé ou la composition existant(e) est une composition de transfert thermique.

29. Procédé selon la revendication 28 dans lequel la composition de transfert thermique est un réfrigérant choisi parmi R134a, R1234yf et R152a, R22, R410A, R407A, R407B, R407C, R507 et R404a.
